# EUROPÄISCHE PATENTANMELDUNG

(11) **EP 2 746 693 A2**
(43) Veröffentlichungstag der Anmeldung: **25.06.2014**
(21) Anmeldenummer: 13450055.2
(22) Anmeldetag: 16.12.2013
(51) Int. Cl.: F24J 2/04, F24J 2/46, F24J 2/52

(54) **Bausatz für den Einbau von Dachaufbauten**

(30) Priorität: 20.12.2012 AT 13252012
(71) Anmelder: Eder, Reinhard, 9100 Völkermarkt (AT)
(72) Erfinder: Rabitsch, Siegfried, 9113 Ruden (AT)
(74) Vertreter: Beer & Partner Patentanwälte KG

(57) **Zusammenfassung**

Zum Integrieren von wenigstens einem Dachaufbau, wie Solarmodul oder Indachkollektor oder dergleichen, insbesondere rahmenloses Photovoltaik-Laminat (1), in ein Dach, insbesondere in eine Dacheindeckung, wird der Dachaufbau mit einem Bausatz eingefasst. Es sind wenigstens zwei Wasserleitprofile (5, 6, 7) vorgesehen, wobei wenigstens ein oberes Wasserleitprofil (5) eine Wasserführung vom Oberteil (2) des Bausatzes oder von der Dachaußenseite auf die Oberseite eines Dachaufbaus bildet und wobei wenigstens ein unteres Wasserleitprofil (6) eine Wasserführung von einem Dachaufbau in Richtung zum Unterteil (3) des Bausatzes oder in Richtung auf die Dachaußenseite bildet.

## Beschreibung

Die Erfindung betrifft einen Bausatz für den Einbau von wenigstens einem Dachaüfbau, wie Solarmodul oder Indachkollektor oder dergleichen, insbesondere rahmenloses Photovoltaik-Laminat, der mehrere zu einer Einfassung zusammenfügbare Teile aufweisen kann, wobei die Einfassung wenigstens ein Oberteil, wenigstens ein Unterteil und wenigstens zwei Seitenteile zum Einfassen von wenigstens einem Dachaufbau aufweist.

Des Weiteren betrifft die Erfindung eine Vorrichtung zum Integrieren von wenigstens einem Dachaufbau in ein Dach, insbesondere in eine Dacheindeckung, mit einem Bausatz gemäß dem Oberbegriff des Anspruches 1 und mit wenigstens einem Dachaufbau, wie Solarmodul oder Indachkollektor oder dergleichen, insbesondere rahmenloses Photovoltaik-Laminat.

Dachkonstruktionen aus tragenden Elementen, beispielsweise Balken, und einer darauf angeordneten Dacheindeckung aus dichtenden Elementen, beispielsweise Ziegel oder Schindeln, gehören in vielfältigen Ausführungen und seit Langem zum Stand der Technik. Bekannt ist zudem, auf der Dacheindeckung Befestigungen für Dachaufbauten anzubringen. Diese Befestigung wird mittels Schrauben auf der Dacheindeckung festgelegt mit dem Nachteil, dass die dichtenden Elemente der Dacheindeckung hierfür durchbohrt werden müssen, wodurch die gewünschte Dichtheit nicht immer auf Jahre hinaus gewährleistet ist.

Um diesen Nachteil zu überwinden ist es bekannt, Solarmodule oder andere Dachaufbauten nicht auf der Dacheindeckung zu befestigen sondern in die Dacheindeckung zu integrieren. Dabei wird zwischen vollintegrierten und teilintegrierten Systemen unterschieden.

Bei vollintegrierten Systeme ist das Laminat der Solarmodule in der Regel rahmenlos und die Laminate sind einander in den Stoßbereichen überlappend angeordnet. Rahmenlose Laminate haben grundsätzlich ein statisches Problem, da das Laminat Stützung für das Tragen von z.B. Schneelast benötigt. Bislang erfolgt die Stützung der Laminate dadurch, dass die Laminate in ihrem oberen Bereich punktuell auf zwei parallel zur Dachoder Fassadenausrichtung verlaufenden Pfosten und im unteren Bereich auf einem unten angrenzenden Laminat gestützt sind. Zwischen zwei nebeneinander angeordneten Laminaten ist ein Wasserkanal angeordnet. Die Regen- oder Eiswasserabdeckung zum Gebäudeinneren erfolgt dadurch, dass das Wasser zum Teil über die Oberfläche der Solarmodule und zum Teil durch den Wasserkanal geführt wird. Nachteilig bei der Wasserführung durch einen Wasserkanal ist grundsätzlich, dass Eis im Wasserkanal nur langsam taut und der Wasserkanal bei Eisbildung daher "verstopft" und abzuführendes Wasser aus dem Kanal hinaustritt. Dabei besteht das Risiko, dass es zu undichten Stellen kommen kann.

Diese vollintegrierten Systeme mit rahmenlosen Laminaten sind zwar im Wesentlichen regendicht aber nicht wasserdicht. Bei Schlagregen kann jedoch Regenwasser im Bereich der Überlappungen hinter das Solarmodul und damit ins Gebäudeinnere gelangen. Nachteilig bei dieser Anordnung ist weiterhin, dass die überlappenden Bereiche Vermoosungen und Veschmutzungsanhaftungen begünstigen. Das über die Solarmodule geführte Regen- oder Eiswasser nimmt zumindest Teile der Verschmutzungen auf und verteilt diese über das Solarmodul, wodurch auf Dauer merkbar die Leistung eines Solarmoduls beeinträchtigt ist. Die Wasserführung hat daher einen eher verunreinigenden Effekt. Zudem können überlappend angeordnete Laminate nur bei Steildächern ab einem Winkel von 15° eingesetzt werden, da sie im Überlappungsbereich nicht abgedichtet sind.

Aus statischen Gründen sind Laminate daher oft mit einem Rahmen versehen. Bekannte Rahmen haben eine Höhe von ca. 33 bis 55 mm.

Es sind vollintegrierte Systeme bekannt, bei denen die Laminate je mit einem Rahmen versehen sind. Bei diesen Systemen wird Regen- oder Eiswasser über jeweils ein Laminat geführt. Um einer verunreinigenden Wirkung der Wasserführung entgegen zu wirken ist am unteren Ende des Laminates ein quer verlaufender Kanal angeordnet, in welchen das Wasser eintritt und durch welche das Wasser in seitlich neben dem Rahmen verlaufende Wasserkanäle, die den genannten Nachteil bei Eisbildung aufweisen, umgelenkt werden soll. Nachteilig ist, dass die Oberseite der Solarmodule an sich keine Abdichtung aufweist. Nachteilig ist weiterhin, dass der Rahmen immer etwas über das Laminat hinaussteht und somit eine Wasserbarriere darstellt, so dass das über ein Laminat fließende Wasser nicht vollständig ablaufen kann. Das sich anstauende Wasser sowie die durch den überstehenden Rahmen hervorgerufene Verschattung beeinträchtigen die Leistung eines Solarmoduls. Auch diese vollintegrierten Systeme mit Rahmen sind zwar im Wesentlichen regendicht aber nicht wasserdicht.

Bei teilintegrierte Systemen ist an der Hinterseite der Laminate eine Dichtebene angeordnet, d.h. die Dichtung ins Gebäudeinnere erfolgt über eine Wasserführung unterhalb des PV-Moduls. Die Einbindung der Laminate ist dabei weder wassernoch regendicht. Bei diesen Systemen ist es ebenfalls bekannt, dass die Laminate mit einem Rahmen versehen sind.

Der Erfindung liegt die Aufgabe zu Grunde, einen Bausatz für Dachaufbauten zur Verfügung zu stellen, welcher insbesondere regen- und wasserdicht ist und mit dem genannte Nachteile überwunden werden.

Gelöst wird diese Aufgabe erfindungsgemäß mit einem Bausatz, der die Merkmale des Anspruches 1 aufweist.

Des Weiteren wird diese Aufgabe erfindungsgemäß mit einer Vorrichtung gelöst, welche die Merkmale des Anspruches 9 aufweist.

Bevorzugte und vorteilhafte Ausführungsformen der Erfindung sind Gegenstand der Unteransprüche.

Der erfindungsgemäße Bausatz sowie die erfindungsgemäße Vorrichtung ist gekennzeichnet durch wenigstens zwei Wasserleitprofile, wobei wenigstens ein oberes Wasserleitprofil im montierten Zustand eine Wasserführung vom Oberteil des Bausatzes oder von der Dachaußenseite auf die Oberseite eines Dachaufbaus bildet und wobei wenigstens ein unteres Wasserleitprofil im montierten Zustand eine Wasserführung von einem Dachaufbau in Richtung zum Unterteil des Bausatzes oder in Richtung auf die Dachaußenseite bildet. Somit wird erreicht, dass Regen- oder Schmelzwasser zur Gänze über eine durchgehende Oberfläche, d.h. über die Oberfläche des Laminats, geführt ist. Dies bewirkt den vorteilhaften Effekt, dass Wasser nicht unterhalb des Laminats gelangen kann, wodurch das Wasser einen reinigenden Effekt für das Laminat hat und das Laminat regen- und wasserdicht in ein Dach integriert werden kann.

In einer besonders bevorzugten Ausführungsform kann vorgesehen sein, dass das obere Wasserleitprofil einen Endabschnitt aufweist, der im montierten Zustand in einem Randbereich des Dachaufbaus auf dessen Oberseite aufliegt und im wesentlichen parallel zur Oberseite eines Dachaufbaus verläuft, und dass das untere Wasserleitprofil einen Endabschnitt aufweist, der im montierten Zustand in einem Randbereich des Dachaufbaus an dessen Unterseite angeordnet ist im wesentlichen parallel zur Unterseite eines Dachaufbaus verläuft. Im Rahmen der Erfindung ist "im Wesentlichen parallel" im Sinne-von "parallel verlaufend" oder "in einem spitzen Winkel verlaufend" zu verstehen. Somit wird erreicht, dass der Bausatz besonders flach gebaut werden kann, d.h. dass der Dachaufbau besonders flach ins Dach integriert werden kann. Eine flache Bauweise bewirkt den vorteilhaften Effekt, dass keine Wasserbarriere durch hervorstehende Teile entsteht, dass der optische Eindruck verbessert wird, dass weniger Beschattung der Dachaufbauten auftritt und wenig Haftungsmöglichkeit für Verschmutzungen, wie Vermoosungen, besteht.

In einer weiteren besonders bevorzugten Ausführungsform kann vorgesehen sein, dass wenigstens ein weiteres Wasserleitprofil vorgesehen ist, das im montierten Zustand eine Wasserführung von einem ersten Dachaufbau zu einem angrenzenden Dachaufbau, insbesondere zu einem im Dachverlauf an der unteren Stirnseite des ersten Dachaufbaus angrenzenden Dachverbaus, bildet. Somit wird erreicht, dass Regen- oder Schmelzwasser zur Gänze über eine durchgehende Oberfläche, d.h. über die Oberfläche aller Laminate, geführt ist. Dies bewirkt den vorteilhaften Effekt, dass Wasser nicht unterhalb der Laminate gelangen kann, wodurch das Wasser einen reinigenden Effekt für die Laminate hat und die Laminate regen- und wasserdicht in ein Dach integriert werden können. Insbesondere ist bei dieser Ausführungsform bevorzugt, wenn das weitere Wasserleitprofil einen ersten Endabschnitt, der im montierten Zustand in einem Randbereich des ersten Dachaufbaus an dessen Unterseite angeordnet ist und im wesentlichen parallel zur Unterseite des ersten Dachaufbaus verläuft, und einen zweiten Endabschnitt, der im montierten Zustand in einem Randbereich des angrenzenden Dachaufbaus auf dessen Oberseite aufliegt und im wesentlichen parallel zur Auflagefläche des angrenzenden Dachaufbaus verläuft, aufweist. Somit kann der Bausatz besonders flach und trotzdem regen- und wasserdicht gebaut werden.

In einer vorteilhaften Ausführungsform des erfindungsgemäßen Bausatzes ist vorgesehen, dass zwischen Endabschnitten von Wasserleitprofilen, die in einem Randbereich eines Dachaufbaus an der Unterseite des Dachaufbaus angeordnet sind, und dem entsprechenden Randbereich des Dachaufbaus ein Dichtungsmittel angeordnet ist.

Insbesondere ist es bevorzugt, wenn die Vorrichtung eine Unterkonstruktion aus Pfosten und Riegeln aufweist und dass gegebenenfalls durch die Unterkonstruktion ein Lüftungsraum unterhalb des Dachaufbaus gebildet ist. Diese Unterkonstruktion sowie alle damit in Verbindung stehenden Merkmale können auch unabhängig vom erfindungsgemäßen Bausatz und insbesondere unabhängig von den erfindungswesentlichen Wasserleitprofilen bei einer Vorrichtung mit den Merkmalen des Oberbegriffes des Anspruches 9 zum Einsatz kommen. Mit einer solchen Unterkonstruktion wird grundsätzlich die Möglichkeit geschaffen, Laminate rahmenlos zu integrieren, wobei der nachteilige Effekt von Rahmen, dass diese eine Wasserbarriere darstellen, sowie der nachteilige statische Effekt von rahmenlosen Laminaten nicht auftritt.

Im Rahmen der Erfindung kann vorgesehen sein, dass der Bausatz Halteprofile aufweist, welche im montierten Zustand des Bausatzes um Teile einer Unterkonstruktion angeordnet sind, insbesondere die Riegel und Pfosten wenigstens bereichsweise umschließen, und welche wenigstens einen Dachaufbau und/oder Wasserleitprofile stützen.

Insbesondere ist bei Ausführungsformen mit Unterkonstruktion bevorzugt, wenn durch wenigstens ein Halteprofil, insbesondere ein um einen Riegel angeordnetes Halteprofil, und wenigstens ein Wasserleitprofil im montierten Zustand eine gegebenenfalls mit einem Dichtmittel versehene Aufnahmeöffnung gebildet ist, in welche ein randseitiger Bereich eines Dachaufbaus einschiebbar ist. Im Rahmen der Erfindung kann auch vorgesehen sein, dass in wenigstens einem um einen Pfosten angeordneten Halteprofil eine gegebenenfalls mit einem Dichtmittel versehene Aufnahmeöffnung gebildet ist, in welche ein randseitiger Bereich eines Dachaufbaus einschiebbar ist. Dies führt zu einer einfachen Montage. Besonders bevorzugt ist dabei, dass die Höhe der Aufnahmeöffnung durch die Größe des Dichtmittels variabel einstellbar ist. Somit kann die Vorrichtung bzw. der erfindungsgemäße Bausatz in einer einheitlichen Größe hergestellt aber an verschieden dicke Dachaufbauten adaptiert werden.

Weiterhin ist bei diesen Ausführungsformen bevorzugt, wenn Wasserleitprofile und/oder wenigstens ein Dachaufbau zwischen Halteprofilen und im entsprechenden Halteprofil befestigbaren Sicherungsmitteln festgelegt sind. Diese Sicherungsmittel können Windsogsicherungen für die Laminate sein.

In einer praktisch vorteilhaften Weiterführung des erfindungsgemäßen Bausatzes bzw. der erfindungsgemäßen Vorrichtung kann an der Unterkonstruktion im Abstand zur untersten Stirnseite von Dachaufbauten und/oder im Bereich der obersten Stirnseite von Dachaufbauten ein Dachsicherheitselement, insbesondere eine Einrichtung, die abrutschenden Schnee stoppt, angeordnet sein.

Im Rahmen der Erfindung können einzelne Teile des Bausatzes bzw. der Vorrichtung, insbesondere die Einfassung und/oder die wenigstens zwei Seitenteile und/oder Wasserleitbleche und/oder die Halteprofile, oder auch alle Teile des Bausatzes aus Blech gefertigt sein.

Eine bevorzugtes Einsatzgebiet der Erfindung betrifft eine Einfassung als Bausatz zum Einbau von Dachaufbauten, insbesondere Solarmodule, in Steildächer mit einem Winkel von größer als ca. 15° zu einer waagerechten Ebene. Da der erfindungsgemäße Bausatz jedoch regen- und wasserdicht ist, kann dieser auch bei Dächern mit einer geringeren oder sogar gar keinen Steigung (Flachdächer) verwendet werden. Der Einsatz an Fassaden ist im Rahmen der Erfindung ebenfalls möglich.

Der erfindungsgemäße Bausatz bzw. die erfindungsgemäße Vorrichtung kann bei neu zu errichtenden Dachkonstruktionen eingesetzt werden oder auch bei sogenannten Aufdach- oder Indachmontagen, d.h. der Bausatz kann auch im Rahmen einer Sanierung auf bereits bestehenden Dachkonstruktionen montiert oder in bereits bestehende, ältere Dachkonstruktionen integriert werden.

Im Rahmen der Erfindung kann die Länge von Wasserleitprofilen im Wesentlichen der Breite eines Dachaufbaus entsprechen und/oder der Breite von zwei oder mehr Dachaufbauten.

Der erfindungsgemäße Bausatz bzw. die erfindungsgemäße Vorrichtung kann für einen einzigen Dachaufbau, z.B. ein einziges Laminat eines Solarmoduls, oder auch für mehrere Dachaufbauten ausgeführt sein.

Oberhalb, unterhalb und/oder zwischen Dachaufbauten können Zwischenteile, z.B. Dachsicherheitselemente, angeordnet sein, wobei die Wasserleitprofile eine Wasserführung über die Oberseite der Dachaufbauten und der Zwischenteile bilden.

Weitere Einzelheiten, Merkmale und Vorteile der Erfindung ergeben sich aus der nachstehenden Beschreibung unter Bezugnahme auf die angeschlossenen Zeichnungen, in welchen eine bevorzugte Ausführungsform dargestellt ist.

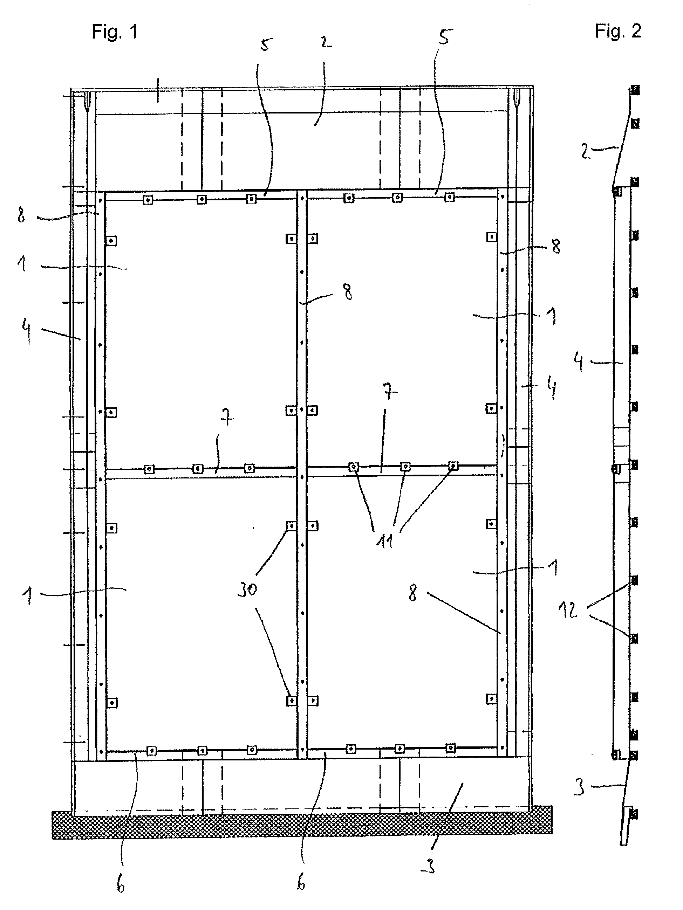

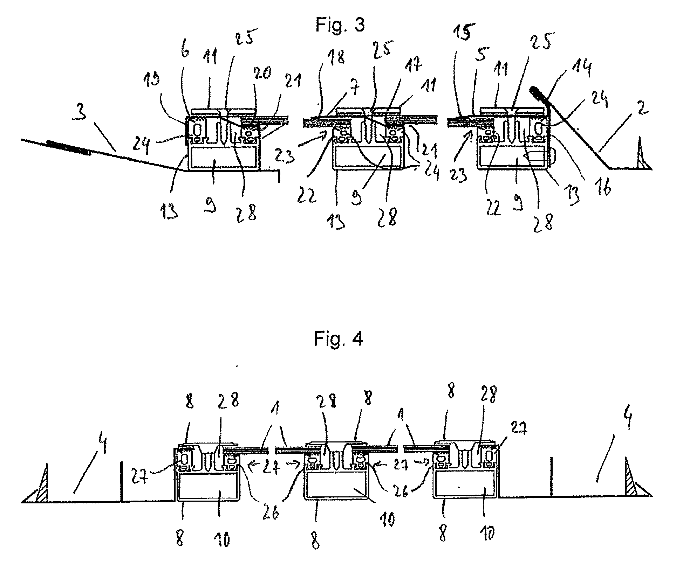

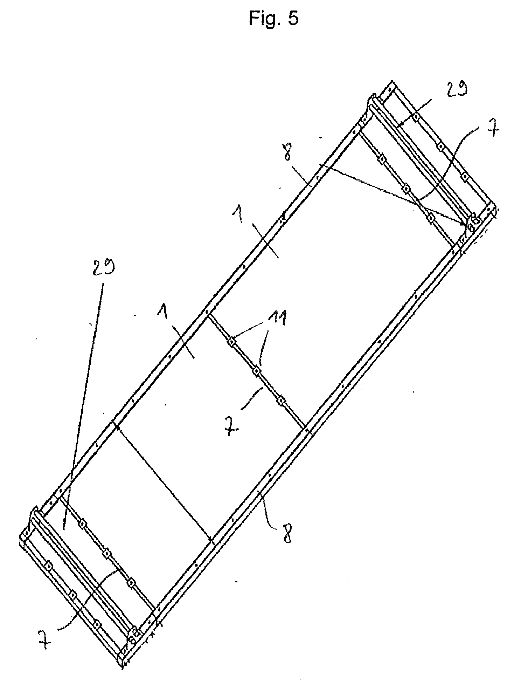

Es zeigt: Fig. 1 eine Ausführungsform einer erfindungsgemäßen Vorrichtung in montiertem Zustand in Draufsicht, Fig. 2 eine Seitenansicht einer Vorrichtung gemäß Fig. 1 auf einer Dachkonstruktion, Fig. 3 und 4 Schnittansichten in einer Vorrichtung gemäß Fig. 1 und Fig. 5 einen Teil einer weiteren Ausführungsform erfindungsgemäßen Vorrichtung in montiertem Zustand mit einem Schneeschutzelement.

In Fig. 1 ist eine Vorrichtung dargestellt, bei welcher vier rahmenlose Photovoltaik-Laminate 1 durch einen montierten Bausatz zusammengefasst sind. Der Bausatz weist mehrere zu einer Einfassung zusammenfügbare Teile auf, wobei die Einfassung ein Oberteil 2, ein Unterteil 3 und zwei Seitenteile 4 aufweist. Zwei obere Wasserleitprofile 5 bilden eine Wasserführung vom Oberteil 2 des Bausatzes auf die Oberseite der beiden oberen Photovoltaik-Laminate 1. Wenn keine Einfassung vorgesehen wäre, würden im Rahmen der Erfindung die oberen Wasserleitprofile 5 eine Wasserführung von der Dachaußenseite auf die Oberseite der beiden oberen Photovoltaik-Laminate 1 bilden. Zwei untere Wasserleitprofile 6 bilden eine Wasserführung von den beiden unteren Photovoltaik-Laminaten 1 zum Unterteil 3 des Bausatzes. Wenn keine Einfassung vorgesehen wäre, würden im Rahmen der Erfindung die unteren Wasserleitprofile 6 eine Wasserführung von den beiden unteren Photovoltaik-Laminaten 1 in Richtung auf die Dachaußenseite bilden.

Im Übergangsbereich zwischen den beiden oberen Photovoltaik-Laminaten 1 und den beiden im Dachverlauf unterhalb angeordneten, unteren Photovoltaik-Laminaten 1 sind zwei weitere Wasserleitprofile 7 angeordnet, die eine Wasserführung von der Oberseite der beiden oberen Photovoltaik-Laminate 1 auf die Oberseite der beiden unteren Photovoltaik-Laminate 1 bilden. Im Übergangsbereich zwischen den jeweils zwei in Fig. 1 links und rechts dargestellten Photovoltaik-Laminaten 1 sowie entlang der Außenkante der Photovoltaik-Laminate 1 verlaufen Halteprofile 8. Im Rahmen der Erfindung können auch mehrere, kürzere Halteprofile 8 verwendet werden. Die Vorrichtung ist gestützt durch eine (in Fig. 1 nicht sichtbare) Unterkonstruktion aus Riegeln 9 und Pfosten 10, wobei die Riegel 9 parallel zu den Wasserleitprofilen 5, 6, 7 und die Pfosten 10 parallel zu den Halteprofilen 8 verlaufen.

Die Unterkonstruktion und die Ober- und Unterseite der Photovoltaik-Laminate 1 verlaufen im Wesentlichen parallel zum Dach- oder Fassadenverlauf.

Die Wasserleitprofile 5, 6, 7 sowie die Photovoltaik-Laminate 1 sind durch als Windsogsicherung dienende Sicherungsmittel 11 gesichert. Jedes Photovoltaik-Laminat 1 ist zusätzlich durch vier Befestigungswinkel 30, die am Pfosten 10 oder am entsprechenden Halteprofil 8 angeordnet sind, gesichert.

Fig. 2 zeigt die Vorrichtung gemäß Fig. 1 auf Balken 12 eines Daches. Es ist ersichtlich, dass die erfindungsgemäße Vorrichtung so gut wie keine Wasserbarrieren aufweist, so dass Wasser durch die Wasserleitprofile 5, 6, 7 im Wesentlichen barrierefrei über die Oberfläche der Photovoltaik-Laminate 1 geführt werden kann. Es ist auch ersichtlich, dass die Vorrichtung zumindest teilweise die bisherige Dacheindeckung ersetzt.

In den Fig. 3 und 4 sind die Bauteile des erfindungsgemäßen Bausatzes im montierten Zustand bzw. der Aufbau der erfindungsgemäßen Vorrichtung mehr im Detail gezeigt.

Fig. 3 zeigt eine Schnittansicht durch die Vorrichtung gemäß Fig. 1 entlang einer parallel zu den Halteprofilen 8 gedachten Linie. Die drei dargestellten Riegel 9 verlaufen unterhalb der in Fig. 1 dargestellten Wasserleitprofile 5, 6, 7. Um die Riegel 9 sind Halteprofile 13 angeordnet, welche sowohl jeweils wenigstens ein Photovoltaik-Laminat 1 als auch ein Wasserleitprofil 5, 6, 7 stützen.

Das obere Wasserleitprofil 5 (in Fig. 3 am rechten Halteprofil 13) weist einen Endabschnitt 14 auf, der im Bereich eines umgebogenen Endes des Oberteils 2 der Einfassung angeordnet ist. Das obere Wasserleitprofil 5 weist zudem einen Endabschnitt 15 auf, der im oberen Randbereich des oberen Photovoltaik-Laminats 1 auf dessen Oberseite aufliegt und flach, in einem spitzen Winkel zur Auflagefläche (= Oberseite des Randbereichs des Photovoltaik-Laminats 1) verläuft. Somit bildet das obere Wasserleitprofil 5 eine barrierefreie Wasserführung auf die Oberseite des Photovoltaik-Laminats 1. Das obere Wasserleitprofil 5 weist noch einen weiteren Endabschnitt 16 auf, der am dicht am Halteprofil 13 anliegt.

Das weitere Wasserleitprofil 7 (in Fig. 3 am mittigen Halteprofil 13) weist einen ersten Abschnitt 17 auf, der im unteren Randbereich des obersten Photovoltaik-Laminats 1 an dessen Unterseite angeordnet ist und im wesentlichen parallel zur Unterseite verläuft. Zwischen dem Abschnitt 17 und dem unteren Randbereich des oberen Photovoltaik-Laminats 1 ist ein Dichtungsmittel 21 angeordnet. Das weitere Wasserleitprofil 7 weist zudem einen zweiten Endabschnitt 18 auf, der im oberen Randbereich des unteren Photovoltaik-Laminats 1 auf dessen Oberseite aufliegt und flach, in einem spitzen Winkel zur Auflagefläche verläuft. Somit bildet das weitere Wasserleitprofil 7 eine barrierefreie Wasserführung von der Oberseite des oberen Photovoltaik-Laminats 1 auf die Oberseite des unteren Photovoltaik-Laminats 1.

Das untere Wasserleitprofil 6 (in Fig. 3 am linken Halteprofil 13) weist einen Endabschnitt 19 auf, der dicht am Halteprofil 13 anliegt und in Richtung zum Unterteil 3 der Einfassung verläuft. Das untere Wasserleitprofil 6 weist zudem einen Abschnitt 20 auf, der im unteren Randbereich des unteren Photovoltaik-Laminats 1 an dessen.Unterseite angeordnet ist und im wesentlichen parallel zur Unterseite verläuft. Zwischen dem Abschnitt 20 und der unteren Randbereich des unteren Photovoltaik-Laminats 1 ist ein Dichtungsmittel 21 angeordnet. Somit bildet das untere Wasserleitprofil 6 eine barrierefreie Wasserführung weg von der Oberseite des unteren Photovoltaik-Laminats 1.

Durch das obere Wasserleitprofil 5 sowie durch das entsprechende Halteprofil 13 ist eine mit einem Dichtmittel 22 versehene Aufnahmeöffnung 23 gebildet, in welche der obere randseitige Bereich des oberen Photovoltaik-Laminats 1 Dachaufbaus eingeschoben ist. Analog dazu ist durch das weitere Wasserleitprofil 7 sowie durch das entsprechende Halteprofil 13 eine mit einem Dichtmittel 22 versehene Aufnahmeöffnung 23 gebildet, in welche der obere randseitige Bereich des unteren Photovoltaik-Laminats 1 Dachaufbaus eingeschoben ist. Durch die Wahl von unterschiedlich großen Dichtmitteln 22, z.B. unterschiedlich starke Dichtlippen, kann die Höhe der Aufnahmeöffnungen 23 jeweils eingestellt werden, so dass mit einem erfindungsgemäßen Bausatz auch Photovoltaik-Laminate 1 mit unterschiedlichen Dicken zusammengefasst werden können. In den Halteprofilen 13 können weitere Dichtungsmittel 24 vorgesehen sein.

Die Halteprofile 13 bilden Aufnahmebereiche für Befestigungsmittel 25, über welche die Wasserleitprofile 5, 6, 7 zwischen den Halteprofilen 13 und im entsprechenden Halteprofil 13 befestigten, als Windsogsicherung dienenden Sicherungsmittel 11 festgelegt sind.

Fig. 4 zeigt eine seitliche Schnittansicht durch die Vorrichtung gemäß Fig. 1 entlang einer parallel zu den Wasserleitprofilen 5, 6, 7 gedachten Linie. Die drei dargestellten Pfosten 10 verlaufen innerhalb der in Fig. 1 dargestellten Halteprofile 8, welche jeweils wenigstens ein Photovoltaik-Laminat 1 stützen.

In den um die Pfosten 10 angeordneten Halteprofilen 8 sind Dichtungsmittel 26, 27 angeordnet. In den Halteprofilen 8 ist jeweils wenigstens eine mit einem Dichtmittel 26 versehene Aufnahmeöffnung 27 gebildet, in welche ein randseitiger Bereich eines Photovoltaik-Laminats 1 eingeschoben ist. Durch die Wahl von unterschiedlich großen Dichtmitteln 26, z.B. unterschiedlich starke Dichtlippen, kann die Höhe der Aufnahmeöffnungen 27 jeweils eingestellt werden, so dass mit einem erfindungsgemäßen Bausatz auch Photovoltaik-Laminate 1 mit unterschiedlichen Dicken zusammengefasst werden können.

Durch die mittels der Dichtungsmittel 21, 24, 26, 27 nach innen abgedichteten und die Windsogsicherung stützenden Unterkonstruktion ist die Möglichkeit geschaffen, Photovoltaik-Laminate 1 in Ausgestaltung einer Feder-NutVerbindung in die Unterkonstruktion einbringen zu können, Dadurch wird zum einen die Montage erleichtert. Zum anderen wirkt die Unterkonstruktion mit den Halteprofilen 8, 13 als Rahmenersatz für die rahmenlosen Photovoltaik-Laminate 1, die erfindungsgemäß seitlich voll umlaufend gestützt werden. Somit ist der statische Nachteil von bisher bekannten rahmenlosen Photovoltaik-Laminaten 1, welche nicht voll umlaufend gestützt sind sondern nur punktuell auf Balken/Pfosten aufliegen, überwunden. Die statischen Bedingungen entsprechen vorteilhafter denen von gerahmten Photovoltaik-Laminaten 1, wobei jedoch keine durch einen Rahmen oder sonstige Bauteile hervorgerufene Wasserbarriere vorliegt.

Die Riegel 9 und Pfosten 10 können innen hohl sein. Somit reduziert sich nicht nur das Gewicht der Vorrichtung, sondern innerhalb von hohlen, in der Regel an einem schrägen Dachverlauf angeordneten Pfosten 10 kann dann ebenfalls anfallendes Kondenswasser abgeführt werden.

Sollte es unerwarteterweise vorkommen, dass Wasser im Randbereich der Photovoltaik-Laminate 1 in ein Halteprofil 8, 13 eindringt, so gelangt dieses Wasser nicht ins Dach, sondern in innerhalb der Halteprofile 8, 13 vorgesehene Kanäle 28. Insbesondere durch Kanäle 28, die in den um Pfosten 10 angeordneten Halteprofile 8 vorgesehen sind, kann dieses Wasser abgeführt werden.

In Fig. 4 ist ebenfalls ersichtlich, dass die Seitenteile 4 der Einfassung zusätzlich einen im Rahmen der Erfindung an sich nicht notwendigen, seitlichen Wasserkanal bilden können

Wie in den Fig. 3 und 4 ersichtlich ist, wird durch die Unterkostruktion ein Lüftungsraum unterhalb der Photovoltaik-Laminate 1 gebildet. Die Hinterlüftung kann unterstützt werden durch in der Einfassung vorgesehene, optionale Zusatzöffnungen, die regen- und eiswassergeschützt angeordnet sind.

In Fig. 5 ist eine weitere Ausführungsform einer erfindungsgemäßen Vorrichtung mit zwei rahmenlosen Photovoltaik-Laminaten 1 und mit Dachsicherheitselementen dargestellt. Diese Dachsicherheitselemente sind insbesondere an der Unterkonstruktion angeordnete Schneeschutzeinrichtungen 29. Eine Schneeschutzeinrichtung 29 ist im Abstand zur untersten Stirnseite des untersten Photovoltaik-Laminats 1 angeordnet. Die andere Schneeschutzeinrichtung 29 ist im Bereich der obersten Stirnseite des oberen Photovoltaik-Laminats 1 angeordnet. Die Schneeschutzeinrichtungen 29 verhindern das Abrutschen von Schnee, z.B. im Eingangsbereich eines Gebäudes.

Die Unterkonstruktion bietet die statischen Möglichkeiten, die Schneeschutzeinrichtungen 29 montieren zu können. Im Gegensatz dazu könnten die Schneeschutzeinrichtungen 29 aus statischen Gründen nicht auf Rahmen montiert werden, da Rahmen nicht dafür ausgelegt sind. Die Unterkonstruktion ist für die Statik der Photovoltaik-Laminate 1 und für die Anbringung der Schneeschutzeinrichtung 29 ausgelegt.

Die in Fig. 5 dargestellte Vorrichtung kann als ein Teil einer erfindungsgemäßen Vorrichtung verstanden werden, wobei seitlich und/oder oberhalb und/oder unterhalb von Photovoltaik-Laminaten 1 weitere Photovoltaik-Laminate 1 und/oder eine Einfassung anschließen kann.

Im Rahmen der Erfindung kann eine Schneeschutzeinrichtung 29 oder ein anderes Dachsicherheitselement auch zwischen zwei Photovoltaik-Laminaten 1, insbesondere zwischen einem ersten Photovoltaik-Laminat 1 und einem im Dachverlauf oberhalb des ersten Photovoltaik-Laminats 1 angeordneten zweiten Photovoltaik-Laminat 1, angeordnet sein. In diesem Fall kann ein Wasserleitprofil 7 vorgesehen sein, welches eine Wasserführung vom oberen Photovoltaik-Laminat 1 in Richtung auf die Oberseite des unteren Photovoltaik-Laminats 1 auf die Oberseite des Dachsicherheitselementes bildet, und ein Wasserleitprofil 7, welches eine Wasserführung vom Dachsicherheitselement auf die Oberseite des unteren Photovoltaik-Laminats 1 bildet.

Bei der Vorrichtung gemäß Fig. 5 sind drei weitere Wasserleitungsprofile 7 dargestellt. Das in Fig. 5 oben dargestellte, weitere Wasserleitprofil 7 bildet eine Wasserführung von der Schneeschutzeinrichtung 29 auf die Oberseite des oberen Photovoltaik-Laminats 1. Das im Übergangsbereich zwischen den beiden Photovoltaik-Laminaten 1 angeordnete, weitere Wasserleitprofil 7 bildet - wie zu Fig. 3 beschrieben, eine Wasserführung von der Oberseite des oberen Photovoltaik-Laminats 1 auf die Oberseite des unteren Photovoltaik-Laminats 1. Das in Fig. 5 unten dargestellte, weitere Wasserleitprofil 7 bildet eine Wasserführung vom unteren Photovoltaik-Laminat 1 auf die Oberseite der Schneeschutzeinrichtung 29. Entlang der Außenkante der Photovoltaik-Laminate 1 verlaufen Halteprofile 8.

Wie zur Fig. 1 beschrieben, ist erfindungsgemäß vorgesehen, dass ein oberes Wasserleitprofil 5 eine Wasserführung von der Dachoberseite bzw. von einem Oberteil 2 in Richtung auf die Oberseite des oberen Photovoltaik-Laminats 1 bildet. D.h., dass das obere Wasserleitprofil 5 Wasser entweder direkt auf die Oberseite des oberen Photovoltaik-Laminats 1 führt oder auf die Oberseite eines Zwischenteils, wie z.B. eines Dachsicherheitselementes, wobei ein weiteres Wasserleitprofil 7 das Wasser dann auf die Oberseite des oberen Photovoltaik-Laminats 1 führt. Ein unteres Wasserleitprofil 6 bildet eine Wasserführung weg vom unteren Photovoltaik-Laminat 1 zum Dach bzw. zu einem Unterteil 3.

Die Unterkonstruktion, die grundsätzliche Anordnung von Riegeln 9 und Pfosten 10, die Ausgestaltung der Halteprofile 8, 13 und der Wasserleitprofile 5, 6, 7 sowie die Anordnung der Photovoltaik-Laminate 1 in den Halteprofilen 8, 13 kann wie oben beschrieben ausgeführt sein.

Auch wenn der erfindungsgemäße Bausatz nur bei rahmenlosen Photovoltaik-Laminaten 1 beschrieben wurde kann der Bausatz auch bei Photovoltaik-Laminaten 1 mit Rahmen verwendet werden.

Zusammenfassend kann ein Ausführungsbeispiel der Erfindung wie folgt dargestellt werden:

Zum Integrieren von wenigstens einem Dachaufbau, wie Solarmodul oder Indachkollektor oder dergleichen, insbesondere rahmenloses Photovoltaik-Laminat 1, in ein Dach, insbesondere in eine Dacheindeckung, wird der Dachaufbau mit einem Bausatz eingefasst. Es sind wenigstens zwei Wasserleitprofile 5, 6, 7 vorgesehen, wobei wenigstens ein oberes Wasserleitprofil 5 eine Wasserführung vom Oberteil 2 des Bausatzes oder von der Dachaußenseite auf die Oberseite eines Dachaufbaus bildet und wobei wenigstens ein unteres Wasserleitprofil 6 eine Wasserführung von einem Dachaufbau in Richtung zum Unterteil 3 des Bausatzes oder in Richtung auf die Dachaußenseite bildet.

## Patentansprüche

1. Bausatz für den Einbau von wenigstens einem Dachaufbau, wie Solarmodul oder Indachkollektor oder dergleichen, insbesondere rahmenloses Photovoltaik-Laminat (1), der mehrere zu einer Einfassung zusammenfügbare Teile aufweisen kann, wobei die Einfassung wenigstens ein Oberteil (2), wenigstens ein Unterteil (3) und wenigstens zwei Seitenteile (4) zum Einfassen von wenigstens einem Dachaufbau aufweist, **gekennzeichnet durch** wenigstens zwei Wasserleitprofile (5, 6, 7), wobei wenigstens ein oberes Wasserleitprofil (5) im montierten Zustand eine Wasserführung vom Oberteil (2) des Bausatzes oder von der Dachaußenseite in Richtung auf die Oberseite eines Dachaufbaus bildet und wobei wenigstens ein unteres Wasserleitprofil (6) im montierten Zustand eine Wasserführung von einem Dachaufbau in Richtung zum Unterteil (3) des Bausatzes oder in Richtung auf die Dachaußenseite bildet.

2. Bausatz nach Anspruch 1, **dadurch gekennzeichnet, dass** das obere Wasserleitprofil (5) einen Endabschnitt (15) aufweist, der im montierten Zustand im wesentlichen parallel zur Oberseite eines Dachaufbaus verläuft, und dass das untere Wasserleitprofil (6) einen Abschnitt (20) aufweist, der im montierten Zustand im wesentlichen parallel zur Unterseite eines Dachaufbaus verläuft.

3. Bausatz nach Anspruch 1 oder 2, gekennzeichnet, dass er wenigstens ein weiteres Wasserleitprofil (7) aufweist, das im montierten Zustand eine Wasserführung von einem ersten Dachaufbau auf die Oberseite eines angrenzenden Dachaufbaus, insbesondere zu einem im Dachverlauf an der unteren Stirnseite des ersten Dachaufbaus angrenzenden Dachverbaus, oder auf die Oberseite eines Zwischenteils bildet, wobei vorzugsweise das weitere Wasserleitprofil (7) einen ersten Abschnitt (17), der im montierten Zustand im wesentlichen parallel zur Unterseite des ersten Dachaufbaus verläuft, und einen zweiten Endabschnitt (18), der im montierten Zustand im wesentlichen parallel zur Auflagefläche an der Oberseite des angrenzenden Dachaufbaus verläuft, aufweist.

4. Bausatz nach einem der Ansprüche 1 bis 3, **dadurch gekennzeichnet, dass** er Halteprofile (8, 13) aufweist, die wenigstens einen Dachaufbau und/oder Wasserleitprofile (5, 6, 7) stützen, wobei vorzugsweise durch wenigstens ein Halteprofil (13) und durch wenigstens ein Wasserleitprofil (5, 8) im montierten Zustand eine gegebenenfalls mit einem Dichtmittel (22) versehene Aufnahmeöffnung (23) gebildet ist, in welche ein randseitiger Bereich eines Dachaufbaus einschiebbar ist.

5. Baüsatz nach Anspruch 4, **dadurch gekennzeichnet, dass** Wasserleitprofile (5, 6, 7) zwischen Halteprofilen (13) und im entsprechenden Halteprofil (13) befestigbaren Sicherungsmitteln (11) festgelegbar sind.

6. Vorrichtung zum Integrieren von wenigstens einem Dachaufbau in ein Dach, insbesondere in eine Dacheindeckung, mit einem Bausatz gemäß dem Oberbegriff des Anspruches 1 und mit wenigstens einem Dachaufbau, wie Solarmodul oder Indachkollektor oder dergleichen, insbesondere rahmenloses Photovoltaik-Laminat (1), **gekennzeichnet durch** wenigstens zwei Wasserleitprofile (5, 6, 7), wobei wenigstens ein oberes Wasserleitprofil (5) eine Wasserführung vom Oberteil (2) des Bausatzes oder von der Dachaußenseite in Richtung auf die Oberseite eines Dachaufbaus bildet und wobei wenigstens ein unteres Wasserleitprofil (6) eine Wasserführung von einem Dachaufbau in Richtung zum Unterteil (3) des Bausatzes oder in Richtung auf die Dachaußenseite bildet.

7. Vorrichtung nach Anspruch 6, **dadurch gekennzeichnet, dass** das obere Wasserleitprofil (5) einen Endabschnitt (15) aufweist, der in einem Randbereich des Dachaufbaus oder in einem Randbereich eines Zwischenteils auf dessen Oberseite aufliegt und im wesentlichen parallel zur Auflagefläche verläuft, und dass das untere Wasserleitblech (6) einen Abschnitt (20) aufweist, der in einem Randbereich des Dachaufbaus oder in einem Randbereich eines Zwischenteils an dessen Unterseite angeordnet ist und im wesentlichen parallel zur Unterseite in diesem Randbereich verläuft.

8. Vorrichtung nach Anspruch 6 oder 7, gekennzeichnet, dass wenigstens ein weiteres Wasserleitprofil (7) angeordnet ist, das eine Wasserführung von einem ersten Dachaufbau auf die Oberseite eines angrenzenden Dachaufbaus, insbesondere zu einem im Dachverlauf an der unteren Stirnseite des ersten Dachaufbaus angrenzenden Dachverbaus, oder auf die Oberseite eines Zwischenteils bildet, wobei vorzugsweise das weitere Wasserleitprofil (7) einen ersten Abschnitt (17), der in einem Randbereich des ersten Dachaufbaus oder Zwischenteils an dessen Unterseite angeordnet ist und im wesentlichen parallel zur Unterseite verläuft, und einen zweiten Endabschnitt (18), der in einem Randbereich des angrenzenden Dachaufbaus oder Zwischenteils auf dessen Oberseite aufliegt und im wesentlichen parallel zur Auflagefläche verläuft, aufweist.

9. Vorrichtung nach Anspruch 7 und/oder 8, **dadurch gekennzeichnet, dass** zwischen Abschnitten (17, 20) von Wasserleitprofilen (6, 7), die in einem Randbereich eines Dachaufbaus oder Zwischenteils an dessen Unterseite angeordnet sind, und dem entsprechenden Randbereich an der Unterseite des Dachaufbaus oder des Zwischenteils ein Dichtungsmittel ((21) angeordnet ist.

10. Vorrichtung nach einem der Ansprüche 6 bis 9, **dadurch gekennzeichnet, dass** sie eine Unterkonstruktion aus Pfosten (10) und Riegeln (9) aufweist und dass gegebenenfalls durch die Unterkonstruktion ein Lüftungsraum unterhalb des Dachaufbaus gebildet ist.

11. Vorrichtung nach Anspruch 10, **dadurch gekennzeichnet, dass** Halteprofile (8, 13) die Riegel (9) und Pfosten (10) wenigstens bereichsweise umschließen und wenigstens einen Dachaufbau und/oder Wasserleitprofile (5, 6, 7) stützen, wobei vorzugsweise durch wenigstens ein um einen Riegel (9) angeordnetes Halteprofil (13) und durch wenigstens ein Wasserleitprofil (5, 7) eine gegebenenfalls mit einem Dichtmittel (22) versehene Aufnahmeöffnung (23) gebildet ist, in welche ein randseitiger Bereich eines Dachaufbaus einschiebbar ist.

12. Vorrichtung nach Anspruch 11, **dadurch gekennzeichnet, dass** Wasserleitprofile (5, 6, 7) und/oder wenigstens ein Dachaufbau und/oder Zwischenteile zwischen Halteprofilen (13) und im entsprechenden Halteprofil (13) befestigbaren Sicherungsmitteln (11) festgelegt ist.

13. Vorrichtung nach Anspruch 12, **dadurch gekennzeichnet, dass** in wenigstens einem um einen Pfosten (10) angeordneten Halteprofil (8) eine gegebenenfalls mit einem Dichtmittel 26) versehene Aufnahmeöffnung (27) gebildet ist, in welche ein randseitiger Bereich eines Dachaufbaus einschiebbar ist.

14. Vorrichtung nach Anspruch 11 und/oder 13, **dadurch gekennzeichnet, dass** die Höhe der Aufnahmeöffnung (23, 27) durch die Größe des Dichtmittels (22, 26) variierbar ist.

15. Vorrichtung nach einem der Ansprüche 10 bis 14, **dadurch gekennzeichnet, dass** an der Unterkonstruktion im Abstand zur untersten Stirnseite von Dachaufbauten und/oder im Bereich der obersten Stirnseite von Dachaufbauten eine Einrichtung (29) angeordnet ist, die abrutschenden Schnee stoppt.
